Europäisches Patentamt

European Patent Office

Office européen des brevets

(11) Publication number: 0 371 629
A1

## EUROPEAN PATENT APPLICATION

(21) Application number: 89311460.3

(22) Date of filing: 06.11.89

(51) Int. Cl.⁵: **C03C 13/04, C03B 37/025, C03C 1/02**

(30) Priority: 01.12.88 GB 8828088

(43) Date of publication of application:
06.06.90 Bulletin 90/23

(84) Designated Contracting States:
BE DE ES FR IT NL

(71) Applicant: STC PLC
1B Portland Place
London W1N 3AA(GB)

(72) Inventor: Pitt, Nicholas John
24a, Ingleby Road
Ilford Essex(GB)
Inventor: Righton, Jane
The Dunbar 33, Elm Grove
Bishop's Stortford Herts CM23 5JB(GB)

(74) Representative: Laurence, Simon French et al
STC Patents West Road
Harlow Essex CM20 2SH(GB)

(54) Optical fibre manufacture.

(57) An optical fibre preform with a rare-earth doped core is made by a vapour deposition process upon the bore of a silica substrate tube (10). The source material for the rare-earth doping is contained in a heated chamber (12) formed upstream of the deposition zone. This source material is a chloride prepared in situ in anhydrous form substantially uncontaminated by oxide or oxychloride by heating a mixture of ammonium chloride and the hydrated rare-earth chloride in a current of helium.

EP 0 371 629 A1

# OPTICAL FIBRE MANUFACTURE

This invention relates to the manufacture of rare-earth doped optical fibres, and particularly to the manufacture of preforms from which such fibres can be drawn. Rare-earth doped optical fibres are of interest as optical fibre configuration laser sources, all-optical optical amplifiers, and sensors.

In United Kingdom Patent Specification No 1475496 there is described a method of optical fibre manufacture which involves the use of a vapour deposition reaction, from which hydrogen and its compounds are excluded, to deposit glass upon the bore of a glass substrate tube. Subsequently the bore of the coated tube is collapsed to produce a solid cross-section rod from which optical fibre can later be drawn. The reagents for the specific deposition reaction described therein are gases and vapours, and the vapours are those of relatively volatile liquids. Vapour entrainment could therefore be satisfactorily achieved by entraining a carrier gas flow through a temperature stabilised bubbler containing the requisite liquid. For incorporating dopants that do not have a suitable liquid compound with an appropriate vapour pressure at a convenient temperature, other methods of vapour entrainment need to be found. Rare-earth-oxide dopants fall within this category, and in GB 2180,832 A, to which attention is directed, there is described a method of making rare-earth doped optical fibre preforms in which one reagent of the vapour deposition process is a rare-earth chloride vapour derived from a quantity of rare-earth chloride lining a heated chamber just upstream of the deposition zone.

For many applications it is highly desirable to minimise the incorporation of any hydrogen or hydrogen-containing compounds into the glass deposit because of the relatively strong optical absorption attributable to the presence of hydroxyl bonds in the glass. It is therefore a potential drawback that rare-earth halides tend to be deliquescent and to have typically six or seven waters of crystallisation. It is therefore generally found advisable to dry the rare-earth halide in situ in the chamber before attempting to use the material as a reagent of the vapour deposition process. GB 2,180,832 A, and the related description of the process appearing in Electronics Letters, 15 August 1985 Volume 21 No. 17 pages 737 - 8, describe drying the halide with gaseous chlorine.

We have found that a significant drawback of this approach to the drying of a hydrated rare-earth halide, such as erbium chloride, by heating it under a flow of chlorine gas is that the drying action results in the production of significant quantities of oxyhalide(or oxyhalide/oxide mixture). Oxyhalide is produced in significant quantities even when the temperature is raised extremely slowly in an attempt to drive off all the water of crystallisation before a temperature is reached at which the halide will react with water to form the oxyhalide. By raising the temperature to somewhat in excess of 600°C the oxyhalide can be dried so as to produce a dry product, but the oxyhalide is so much more refractory than its halide that it is not a practical reagent for the deposition process. Temperatures needed to provide sufficient vapour pressure would exceed those at which the other reagents would begin to react and deposit inthe source material chamber instead of in the substrate tube where deposition is required to take place. Apart from its ineffectiveness as a reagent, the presence of significant quantities of oxyhalide in residual halide is a disadvantage because its refractory nature is such that it prevents the source material from fusing to the walls of the source material chamber, with the result that loose particles are liable to become entrained in the reagent flow to pass down into the substrate tube and become incorporated in the deposit where, in fibre subsequently drawn from the preform, they with cause unacceptable light scattering losses and a reduction in fibre strength.

According to the present invention there is provided a method of making a rare-earth doped optical fibre preform in which a vapour deposition process is employed to deposit glass upon a substrate, wherein at least a portion of the deposited glass is doped with a rare-earth oxide, the rare-earth component of which oxide is derived from a quantity of anhydrous rare-earth halide substantially uncontaminated by rare-earth oxide or oxyhalide contained in a chamber through which the other reagents for the vapour deposition are caused to flow, and characterised in that said quantity of anhydrous rare-earth halide is prepared in situ in the chamber by heating a mixture of hydrated rare-earth halide and ammonium halide while maintaining a gas flow through the chamber.

Preferably the substrate upon which the glass is deposited is a tube, and the deposit is made upon the bore of that tube. The preferred vapour deposition process is one from which hydrogen and its compounds are excluded so as to minimise the extent of hydroxyl contamination of the deposit.

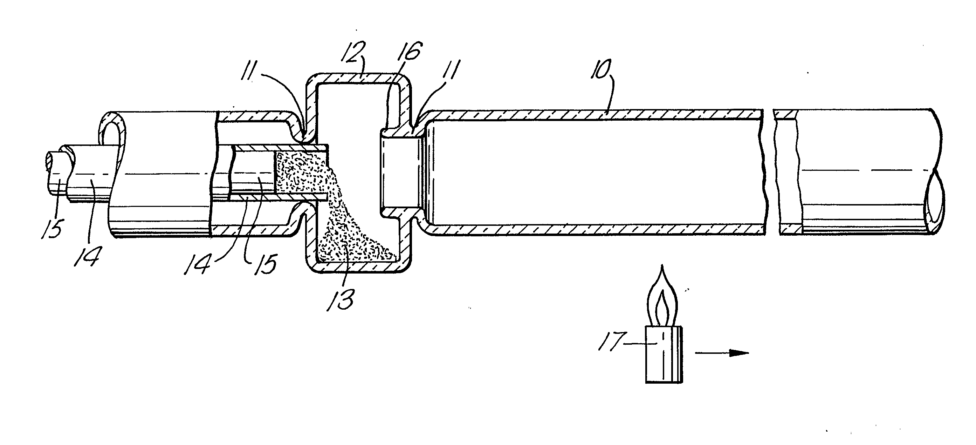

There follows a description of the manufacture of an erbium oxide doped optical fibre preform according to a method embodying the invention in a preferred form. The description refers to the accompanying drawing which is a schematic diagram of the substrate tube in which deposition takes place.

The optical fibre preform whose manufacture is now to be described is constructed by using a vapour deposition process to deposit glass upon the greater part of the length of the bore of a glass substrate tube 10 made of silica. Near one end of this tube are made two reduced diameter portions 11 defining between them a chamber 12, which is of enlarged diameter, for containing a charge 13 of rare-earth chloride. In the case of a typical substrate tube measuring 25 x 19 x 1200 mm this chamber may typically be charged with 2.0g of hydrated erbium chloride (ErCl$_3$·6H$_2$0) admixed with 3.0g of ammonium chloride (NH$_4$Cl). A convenient way of introducing this charge of powder is by means of a subsidiary glass tube 14 and push-rod 15. Optionally an insert 16 may be fused to one of the two reduced diameter portions 11 in order to form a lip impeding accidental migration of any of the powder into the main body of the tube 10.

After the chamber 12 has been charged with the powder mixture 13, the tube 10 is mounted between the head-stock and tail stock (not shown) of a lathe, with the chamber end of the tube fitted into a rotating gas-tight seal (not shown) by way of which the other reagents for the vapour deposition process are introduced into the substrate tube 10. A resistance furnace (not shown) is placed around the chamber 12 and is employed to heat the powder mixture while a flow of dry helium is maintained through the tube. The temperature is ramped up to about 400°C in a period of about half an hour, and is maintained at this temperature for about another half hour. During this time most of the water originally present inthe mixture is driven off and the ammonium chloride is caused to sublime and recollect further downstream in a cooler part of the substrate tube. It is believed that the presence of the ammonium chloride is effective in preventing the rare-earth chloride from reacting with its water of crystallisation to produce significant quantities of oxide or oxychloride. Alternatively it may be that the ammonium chloride is effective in reducing rare-earth oxide or oxychloride, already formed, back to the chloride.

The now substantially anhydrous rare-earth chloride is next subjected to a further heating step in order to reduce its hydroxyl contamination still further. This heating is to a temperature of about 700 to 800°C for about 15 to 30 minutes under a flow of a mixture of helium and chlorine, and at this stage the chloride melts.

Next the electric furnace surrounding the chamber is removed to allow the chloride to cool to room temperature before attempting to subject the rest of the tube to conventional etch cleaning step preparatory for glass deposition. For this etch cleaning step the tube is rotated about its axis while a flow of dry oxygen and a dry fluorine containing gas, such as difluorodichloromethane, is maintained in the tube, and while a burner 17 is slowly traversed one or more times along the tube in the direction of gas flow.

The traversal of the burner 17 also serves to drive out of the tube walls any remaining traces of ammonium chloride deposited during the drying of the erbium chloride in the chamber 12.

Following etching of the bore of the substrate tube 10, a slightly lower burner temperature is employed for the deposition of cladding glass index-matched with the substrate using a mixture of helium, oxygen silicon tetrachloride, phosphorus oxychloride and difluorodichloromethane. Next the electric resistance furnace is heated to the required temperature preparatory for encasing around the chamber 12. When the furnace has reached the required temperature, typically in the range 600 to 1,000°C, it is placed around the chamber 12, and deposition of core glass is commenced. The reagents for this deposition are oxygen, silicon tetrachloride, germanium tetrachloride and erbium chloride from the chamber 12, these reagents being admixed with helium. A still lower deposition temperature is employed for this deposition, typically in the region of 1,250°C, so that the deposit is formed as a porous mass. This porous mass is dried using one or more traverses at an even lower temperature, during which time the gas flow mixture is a mixture solely of chlorine and helium. Then the burner temperature is raised to approximately the same temperature as that used for deposition of the index-matched optical cladding glass for a further traverse of the burner to fuse the porous deposit into a transparent coherent glassy layer. This is accomplished in an atmosphere of oxygen, chlorine and helium. This completes the deposition process, after which the electric resistance furnace is once again removed from around the chamber 12.

Once the bore has been fully collapsed by traversing the burner at a temperature in excess of 2,200°C , optical fibre may be drawn from the resulting solid cross-section optical fibre preform using a conventional silica optical fibre preform drawing tower and furnace (not shown).

In a specific example of the application of the above described method of optical fibre manufacture, the chamber 12 was maintained at a temperature of 950°C during the deposition of the core glass to produce a fibre whose concentration of erbium in the preform core reached $10^{20}$ cm$^{-3}$ (1.25 wt % Er$^{3+}$).

**Claims**

1. A method of making a rare-earth doped optical fibre preform in which a vapour deposition process is employed to deposit glass upon a substrate, wherein at least a portion of the deposited glass is doped with a rare-earth oxide, the rare-earth component of which oxide is derived from a quantity of anhydrous rare-earth halide substantially uncontaminated by rare-earth oxide or oxyhalide contained in a chamber through which the other reagents for the vapour deposition are caused to flow, and characterised in that said quantity of anhydrous rare-earth halide is prepared in situ in the chamber by heating a mixture of hydrated rare-earth halide and ammonium halide while maintaining a gas flow through the chamber.

2. A method as claimed in claim 1, wherein the vapour deposition process is one from which hydrogen and its compounds are excluded.

3. A method as claimed in claim 1 or 2, wherein the rare-earth halide is a rare-earth chloride.

4. A method as claimed in claim 1, 2 or 3, wherein the ammonium halide is ammonium chloride.

5. A method as claimed in any preceding claim, wherein the rare-earth is erbium.

6. An optical fibre preform made by the method claimed in any preceding claim.

7. An method as claimed in any claim of claims 1 to 5, wherein the substrate upon which the glass is deposited is a tube, and wherein the deposit is made upon the bore of that tube to provide a tubular preform.

8. A solid cross-section optical fibre preform made by collapsing the bore of a tubular preform made by the method as claimed in any preceding claim.

9. An optical fibre drawn from a solid cross-section preform as claimed in claim 6 or 8.

N.J. PITT ET AL 2-1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | WO-A-8 701 110 (POOLE) <br> * Claims 1-11; page 4, lines 8-15 * <br> --- | 1-9 | C 03 C 13/04 <br> C 03 B 37/025 <br> C 03 C 1/02 |
| Y | CHEMICAL ABSTRACTS, vol. 75, no. 4, 26th July 1971, page 625, abstract no. 29414x, Columbus, Ohio, US; G.A. KRESTOV et al.: "New method for preparing anhydrous rare earth chlorides", & IZV. VYSSH. UCHEB. ZAVED., KHIM. KHIM. TEKHNOL. 1971, 14(3), 462-4 <br> * Abstract * <br> --- | 1-9 | |
| Y | CHEMICAL ABSTRACTS, vol. 104, no. 24, 16th June 1986, page 282, abstract no. 211879x, Columbus, Ohio, US; Y. OISHI et al.: "Method and apparatus for fluoride glass manufacture", & JP-A-60 251 146 (NIPPON TELEGRAPH AND TELEPHONE PUBLIC CO.) 11-12-1985 <br> * Abstract * <br> --- | 1-9 | |
| Y | CHEMICAL ABSTRACTS, vol. 87, no. 20, 14th November 1977, page 596, abstract no. 160916c, Columbus, Ohio, US; NGUYEN THANH QUANG et al.: "Study of the technical conditions for the production of rare earth chlorides from their sesquioxides", & TAP CHI HOA HOC 1976, 14(1), 1-4 <br> * Abstract * <br> ----- | 1-9 | TECHNICAL FIELDS SEARCHED (Int. Cl.5) <br><br> C 03 C <br> C 03 B <br> C 01 F |

The present search report has been drawn up for all claims

| Place of search | Date of completion of the search | Examiner |
|---|---|---|
| THE HAGUE | 23-02-1990 | VAN BOMMEL L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)